# FASCICULE DE BREVET EUROPEEN

(11) **EP 1 505 347 B1**
(45) Date de publication et mention de la délivrance du brevet: **15.03.2006**
(21) Numéro de dépôt: 04291890.4
(22) Date de dépôt: 23.07.2004
(51) Int. Cl.: F23R 3/20, F02K 3/10

(54) **Dispositif de post-combustion**
Nachverbrennungsvorrichtung
Post-combustion device

(30) Priorité: 05.08.2003 FR 0309657
(43) Date de publication de la demande: 09.02.2005
(73) Titulaire: SNECMA, 75015 Paris (FR)
(72) Inventeur: Bunel, Jacques, Marcel, Arthur, 94260 Fresnes (FR); Roche, Jacques, André, Michel, 91090 Lisses (FR); Rakotondrainibe, Bien-Aimé, Olivier,Solo,Samuel,P., 77630 Arbonne La Foret (FR); Touchaud, Stéphane, Henri, Guy, 75012 Paris (FR)
(74) Mandataire: Plaçais, Jean Yves

(56) Documents cités:
- FR-A- 1 321 385
- FR-A- 2 696 502
- FR-A- 2 770 284

## Description

L'invention concerne le domaine des moteurs turboréacteur à double flux, et plus particulièrement des dispositifs de post-combustion.

Les turboréacteurs à double flux comprennent un flux de gaz d'échappement dit flux primaire étant à température plus élevée qu'un flux d'air dit flux secondaire. Il est connu que les turboréacteurs à double flux comprennent un dispositif de post combustion. Ce dernier comprend un carter annulaire externe et un carter annulaire d'échappement à l'intérieur et à distance du carter annulaire externe et comprenant des parois annulaire interne et externe ayant pour axe de révolution l'axe de rotation du turboréacteur. La paroi externe et le carter annulaire externe définissent un passage pour le flux secondaire, la paroi annulaire externe et la paroi annulaire interne définissent un passage pour le flux primaire. Après une première combustion dégageant le flux de gaz d'échappement (flux primaire) à travers les turbines haute et basse pression, le turboréacteur comprend un dispositif utilisant l'injection de carburant dans le flux primaire et le flux secondaire pour déclencher une seconde combustion. Il est connu des dispositifs de post-combustion comprenant un anneau brûleur situé dans le flux secondaire et des bras accroche-flammes situé dans le flux primaire mélangé à une partie du flux secondaire. Il est également connu des dispositifs de post-combustion comprenant un anneau brûleur situé dans le flux primaire. Un tel dispositif est par exemple connu du document FR-A. 2696 502. Il résulte de cette position de fortes contraintes thermiques.

La présente invention vient proposer d'améliorer le dispositif de post combustion.

L'invention concerne un anneau de post-combustion pour turboréacteur à double flux, un flux de gaz d'échappement dit flux primaire étant à température plus élevée qu'un flux d'air dit flux secondaire, l'anneau ayant un axe de révolution propre à être mis en coïncidence avec l'axe de rotation du turboréacteur, l'anneau comprenant d'une part une enveloppe annulaire amont formant une gorge ouverte axialement vers l'aval et d'autre part une rampe d'injection de carburant disposé dans la gorge, l'anneau étant formé d'une pluralité de secteurs d'anneau reliés entre eux et comprenant chacun un secteur de l'enveloppe annulaire amont, chaque secteur de l'enveloppe annulaire amont étant munie d'une arrivée de carburant raccordée à la rampe d'injection de carburant.

Selon une caractéristique principale de l'invention, la surface amont (ou externe) de l'enveloppe annulaire amont est apte à être en contact avec le flux primaire. De plus, chaque secteur d'anneau comprend un moyen de raccordement, disposé dans la gorge en amont de la rampe d'injection de carburant, pour recevoir d'une part l'arrivée de carburant et d'autre part un caisson de ventilation s'étendant dans la gorge sur une partie au moins de la longueur du secteur de l'enveloppe annulaire amont et en amont de la rampe d'injection de carburant, chaque secteur de l'enveloppe annulaire amont étant munie d'une arrivée d'air secondaire diffusé par le caisson de ventilation afin de refroidir la rampe d'injection de carburant. En outre, un secteur d'enveloppe annulaire aval est disposé en aval de la rampe d'injection de carburant afin de protéger la rampe d'injection de carburant.

L'invention concerne également un dispositif de post-combustion pour turboréacteur à double flux, un flux de gaz d'échappement dit flux primaire étant à température plus élevée qu'un flux d'air dit flux secondaire, le dispositif comprenant un carter annulaire externe et un carter annulaire d'échappement à l'intérieur et à distance du carter annulaire externe et comprenant des parois annulaire interne et externe ayant pour axe de révolution l'axe de rotation du turboréacteur, la paroi externe et le carter annulaire externe définissant un passage pour le flux secondaire, la paroi annulaire externe et la paroi annulaire interne définissant un passage pour le flux primaire, le dispositif comprenant encore des bras de post-combustion.

Selon une caractéristique principale de l'invention, la paroi externe présente des orifices et le dispositif comprend l'anneau de post-combustion précédemment défini fixé à la paroi annulaire externe de telle sorte que la surface amont de l'enveloppe annulaire amont est en contact avec le flux primaire et que l'arrivée d'air secondaire de chaque secteur de l'enveloppe annulaire amont coïncide avec les orifices de la paroi externe.

Les figures ci-après illustrent de manière non limitative des modes de réalisation de l'invention :
- la figure 1A représente en coupe un turboréacteur à double flux,
- la figure 1B représente un détail de la coupe du turboréacteur à double flux de la figure 1A,
- la figure 1C représente une vue en relief d'un secteur d'anneau brûleur dans une première phase d'assemblage selon l'invention,
- la figure 2 représente une vue en relief d'un secteur d'anneau brûleur dans une deuxième phase d'assemblage selon l'invention
- la figure 3 est une coupe A-A du secteur d'anneau brûleur de la figure 5,
- la figure 4 est une vue en relief du secteur d'anneau brûleur muni d'embout de fixation à ses extrémités,
- la figure 5 est une vue vers l'aval du secteur d'anneau brûleur muni d'embout de fixation à ses extrémités,
- la figure 6 est une coupe schématique générale du dispositif de post combustion ne comprenant ici que l'anneau brûleur selon l'invention,
- la figure 7 est une vue en relief de l'amont de l'embout de raccordement,
- la figure 8 est une vue en relief de l'aval de l'embout de raccordement,
- la figure 9 est une vue en relief de l'aval de l'embout de raccordement relié au caisson de ventilation,
- la figure 10 est une vue en relief de l'amont de l'embout de raccordement relié au caisson de ventilation.

Les dessins contiennent, pour l'essentiel, des éléments de caractère certain. Ils pourront donc non seulement servir à mieux faire comprendre la description, mais aussi contribuer à la définition de l'invention, le cas échéant.

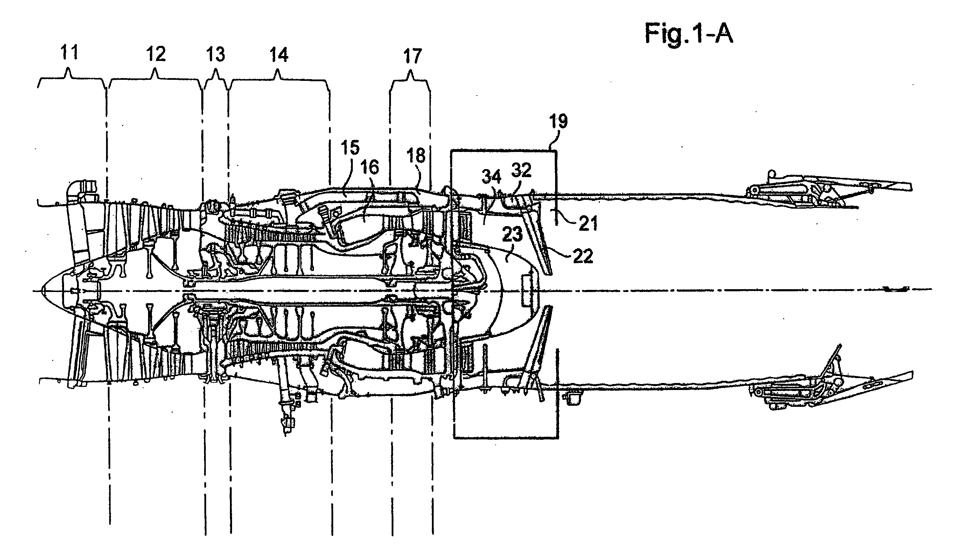

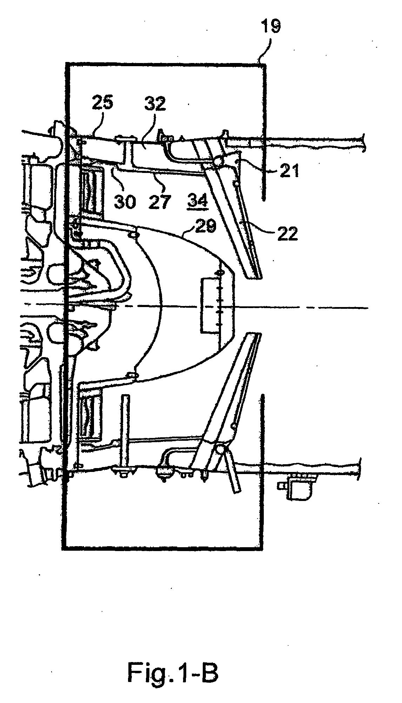

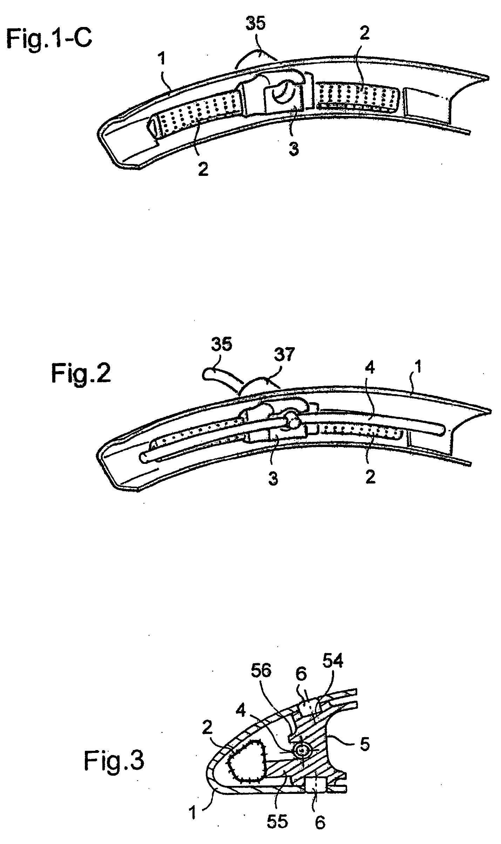

La figure 1A représente le schéma d'un turboréacteur à double flux.

L'air est tout d'abord aspiré par le soufflante d'entrée 11 puis dirigé dans le compresseur basse pression 12. Une partie du flux d'air comprimé est dirigé dans le compresseur haute pression 14 et l'autre partie dans la partie 18 du turboréacteur. Après la chambre de combustion 16, les gaz d'échappement sont dirigés dans la turbine haute pression puis la turbine basse pression 17 avant d'être dirigés dans le carter d'échappement 23. Ces gaz d'échappement à haute température correspondent à un flux primaire. Le flux d'air froid de la partie 18 du turboréacteur est réchauffé au contact du passage 15 d'air chaud. Le flux d'air réchauffé est appelé flux secondaire.

Le dispositif de post combustion 19 est maintenant expliqué en référence à la figure 1B détaillée. Ce dispositif de post combustion comprend un carter annulaire externe 25 et un carter annulaire d'échappement à l'intérieur et à distance du carter annulaire externe. Les deux carter ont le même axe de révolution correspondant à l'axe de rotation du turboréacteur. Le carter annulaire d'échappement comprend des parois annulaire interne 29 et externe 27 ayant pour axe de révolution l'axe de rotation du turboréacteur, la paroi externe 27 et le carter annulaire externe 25 définissant un passage 32 pour le flux secondaire après son passage dans la partie 18, la paroi annulaire externe 27 et la paroi annulaire interne 29 définissant un passage 34 pour le flux primaire après son passage dans les turbines 17. Un orifice 30 dans la paroi annulaire externe 27 permet de laisser un passage pour que le flux secondaire se mélange au flux primaire dans le passage 34. Un mécanisme d'arrivée de carburant dans le passage 34 permet au mélange flux primaire/secondaire/carburant de s'enflammer, les flammes se fixant sur les bras accroche-flamme 22. Comme indiqué sur la figure 1B, des bras sont accrochés au carter externe et s'étendent vers l'aval selon un angle d'inclinaison par rapport à un plan perpendiculaire à l'axe de rotation. De plus, un anneau brûleur 21 est placé dans le flux secondaire et se compose de secteurs d'anneau disposés entre les bras accroche-flamme. L'enveloppe annulaire amont de cet anneau brûleur protège contre les flammes de post combustion et contre le flux primaire à haute température (900°C) une rampe d'injection de carburant qui pulvérise le carburant vers l'aval de manière à entretenir la post combustion.

Pour améliorer le rendement de la post combustion, l'anneau brûleur est placé dans le flux primaire. Cette disposition engendre des contraintes thermiques très élevées au niveau de l'anneau brûleur. Ainsi, selon l'invention, ce dernier est réalisé de telle manière que les contraintes thermiques sont réduites et le rendement de la post combustion amélioré.

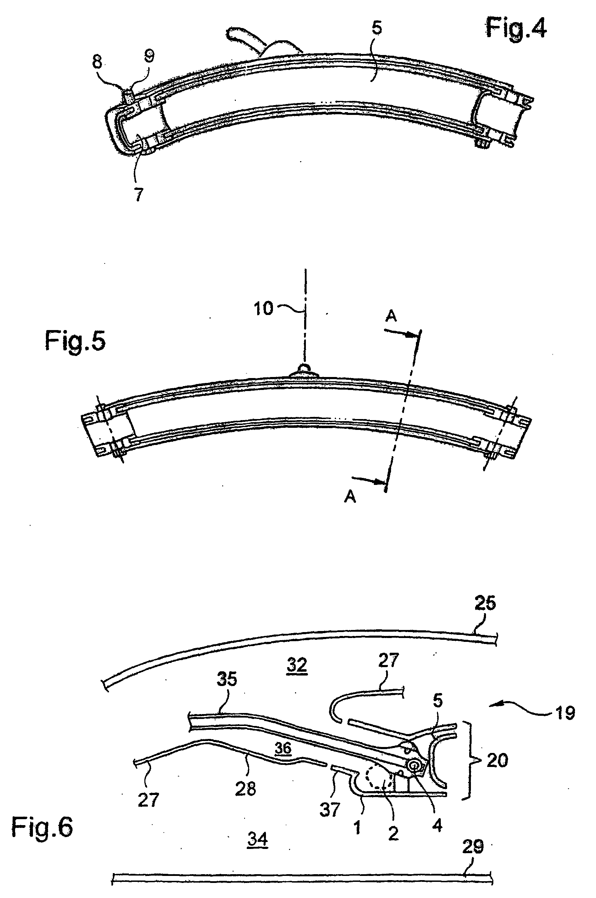

La figure 6 présente une coupe schématique du dispositif de post combustion selon l'invention. Ce dispositif comprend un anneau brûleur comprenant d'une part une enveloppe annulaire amont formant une gorge ouverte axialement vers l'aval et d'autre part une rampe d'injection de carburant 4 disposée dans la gorge, l'anneau brûleur étant formé d'une pluralité de secteurs d'anneau 20 reliés entre eux et comprenant chacun un secteur 1 de l'enveloppe annulaire amont, chaque secteur 1 de l'enveloppe annulaire amont étant munie d'une arrivée de carburant 35 raccordée à la rampe d'injection de carburant 4. A titre d'exemple uniquement, l'enveloppe annulaire amont est constituée d'un dièdre annulaire dont l'arête arrondie est dirigée vers l'amont, la plaque interne du dièdre étant parallèle à l'axe de rotation et la plaque externe étant dirigée radialement vers l'extérieur. Selon la figure 6, la paroi annulaire externe 27 comprend, dans un plan perpendiculaire à l'axe de rotation, des orifices 36 espacés régulièrement sur toute la circonférence de la paroi annulaire externe 27. Ces orifices 36 sont délimités par une partie de tube 28 s'étendant vers l'aval, cette partie de tube 28 à extrémités ouvertes formant, par moulage, une unique pièce avec la paroi annulaire interne 27 à titre d'exemple. La partie de tube 28 s'étend vers l'aval selon un angle d'inclinaison par rapport à un plan perpendiculaire à l'axe de rotation. Chaque secteur de l'enveloppe annulaire amont de l'anneau brûleur, plus particulièrement chaque plaque externe de chaque secteur comprend un orifice délimité par une partie de tube 37 s'étendant vers l'amont selon un angle d'inclinaison par rapport à un plan perpendiculaire à l'axe de rotation. L'orifice du secteur de l'enveloppe annulaire amont est adapté pour coïncider et pour être fixé avec un des orifice de la paroi annulaire externe 27.

L'orifice du secteur de l'enveloppe annulaire amont sert d'arrivée d'air secondaire et d'arrivée de carburant dans la gorge formée par le secteur de l'enveloppe annulaire amont. Une autre réalisation des orifices pourrait être envisagée pour dissocier l'arrivée d'air de l'arrivée de carburant. L'arrivée de carburant est plus particulièrement effectuée à travers un tube 35 passant par les orifices en coïncidence de la paroi annulaire externe et du secteur de l'enveloppe annulaire amont. Le tube 35 débouche à son extrémité sur une tête de raccordement reliée à la rampe d'injection de carburant disposée dans la gorge délimitée par le secteur de l'enveloppe annulaire amont. Cette rampe d'injection de carburant 4 s'étend sur au moins une partie du secteur 1 de l'enveloppe annulaire amont et est constituée d'un tube perforé vers l'aval. Dans une ambiance à très haute température due à la position de l'anneau brûleur dans le flux primaire, la ventilation et le refroidissement de chaque secteur de l'anneau brûleur est nécessaire pour éviter de trop fortes contraintes thermiques. Afin d'améliorer la ventilation de l'enveloppe annulaire amont et de la rampe d'injection de carburant, un caisson de ventilation 2 est disposé dans la gorge en amont de la rampe d'injection de carburant 4 et alimenté par l'arrivée d'air. La figure 1-C présente la mise en place du caisson de ventilation avant celle de la rampe d'injection de carburant dans la gorge comme indiqué sur la figure 2. Chaque tube du caisson de ventilation est doté de bossages locaux, appelés pions, afin de garantir un entrefer entre le secteur d'enveloppe annulaire amont et le caisson de ventilation.

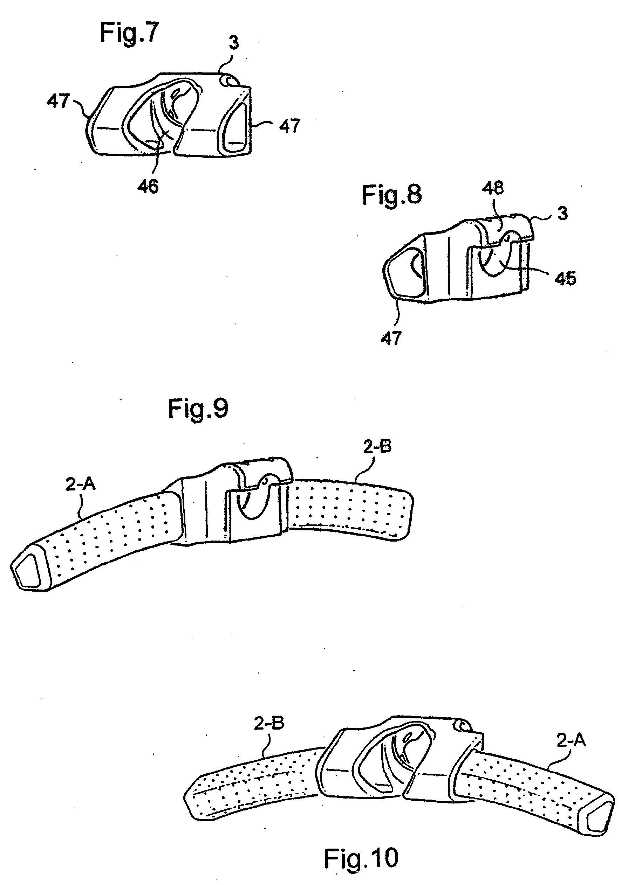

Chaque secteur d'anneau brûleur comprend un embout de raccordement 3, disposé dans la gorge en amont de la rampe d'injection de carburant, pour recevoir d'une part le tuyau d'arrivée de carburant et l'arrivée d'air, et d'autre part le caisson de ventilation s'étendant dans la gorge sur une partie au moins de la longueur du secteur de l'enveloppe annulaire amont et en amont de la rampe d'injection de carburant. Cet embout de raccordement est plus particulièrement détaillé sur les figures 7, 8, 9 et 10.

L'embout de raccordement 3 a une forme complémentaire de la gorge formée par l'enveloppe annulaire amont afin d'être placé en amont de la rampe d'injection de carburant. Cet embout comprend un creux principal susceptible d'être placé en vis à vis de l'orifice du secteur de l'enveloppe annulaire amont et de recevoir la tête de raccordement de l'arrivée de carburant et l'arrivée d'air. Le creux principal débouche sur une ouverture aval 45 afin de permettre à la tête de raccordement d'être reliée à la rampe d'injection de carburant qui est disposée perpendiculairement à la direction de la tête de raccordement. Afin d'éviter la rotation de la tête de raccordement dans le creux débouchant sur l'ouverture aval, l'embout de raccordement comprend une avancée 48 s'étendant axialement et située radialement vers l'extérieur au-delà de l'ouverture aval. De plus, l'embout de raccordement 3 comprend des ouvertures latérales, c'est à dire des ouvertures en vis à vis s'étendant sur la circonférence de l'anneau et de part et d'autre du creux principal d'arrivée d'air. Ces ouvertures latérales permettent la mise en place du caisson de ventilation. Avantageusement, le caisson de ventilation comprend deux tubes creux multi-perforés adaptés pour être chacun maintenu à leur extrémité ouverte dans un des deux orifices latéraux, leur extrémité libre débouchant dans le creux principal. L'air arrivant par l'orifice du secteur de l'enveloppe annulaire amont passe dans le creux principal formant réceptacle d'arrivée d'air et est dirigé latéralement et circonférentiellement dans les tubes creux du caisson de ventilation par leur extrémité positionnée dans les ouvertures latérales de l'embout de raccordement.

Afin de protéger la rampe d'injection de carburant et le caisson de ventilation des retour de flammes et du rayonnement, un secteur d'enveloppe annulaire aval 5 est disposé en aval de celle-ci dans la gorge délimitée par le secteur d'enveloppe annulaire amont. Ce secteur d'enveloppe annulaire aval a une section axiale généralement semi-circulaire, les extrémités de cette section formant respectivement avec les extrémités des plaques du secteur d'enveloppe annulaire amont des passages pour le carburant provenant de la rampe d'injection de carburant. Ce secteur d'enveloppe annulaire aval 5 forme un écran de protection thermique de l'anneau brûleur vers l'aval.

Le secteur d'enveloppe annulaire aval forme une gorge ouverte axialement vers l'aval et est fixé par des moyens de fixation au secteur de l'enveloppe annulaire amont. Ces moyens de fixation peuvent être un rivet. Comme indiqué sur la figure 3, le secteur d'enveloppe annulaire aval 5 comprend des moyens de maintien placés axialement en amont de ce secteur afin de maintenir en place la rampe d'injection de carburant, de maintenir en place le caisson de ventilation contre la paroi interne du secteur d'enveloppe annulaire amont et de relier ponctuellement le secteur d'enveloppe annulaire aval à la surface aval du secteur d'enveloppe annulaire amont. Ces moyens de maintien sont par exemple des pattes 54 (par exemple deux pattes par secteur) d'une largeur circonférentielle faible, moulées d'une seule pièce avec le secteur d'enveloppe annulaire aval et en amont de ce dernier. Une patte 54 est représentées en coupe sur la figure 3. Cette patte 54 comprend un ergot interne 55 s'étendant axialement en amont du secteur d'enveloppe annulaire aval afin que, une fois le secteur d'enveloppe annulaire aval positionné correctement dans la gorge formé par le secteur d'enveloppe annulaire amont, cet ergot interne 55 repousse un des tubes du caisson de ventilation contre le fond de cette gorge. Un ergot externe 56 de la patte 54 délimite avec l'ergot interne 55 une cavité concave pour recevoir la rampe d'injection de carburant afin de maintenir cette dernière éloignée d'un certaine distance de la surface amont du secteur d'enveloppe annulaire aval 5. Ainsi, le secteur d'enveloppe annulaire aval 5 joue bien le rôle d'écran protecteur thermique. La patte 54 comprend également à ses extrémités radiales interne et externe des cavités à placer en vis à vis avec des trous formés dans le secteur de l'enveloppe annulaire amont de façon à disposer des pions 6 traversant les trous pour venir en appui dans les cavités. Ces pions 6 sont soudés afin de fixer entre-eux les secteur de l'enveloppe annulaire amont et aval. D'autres moyens de fixation des secteurs de l'enveloppe annulaire amont et aval peuvent être envisagés afin de pouvoir enlever l'écran de protection thermique pour la maintenance de l'anneau brûleur.

Les figures 4 et 5 représentent un secteur de l'anneau brûleur muni à ses extrémités d'embouts de fixation latérale pour relier ce secteur à un autre secteur à chaque extrémité. Ainsi, les secteurs d'anneau sont reliés entre eux par des embouts de fixation latérale comprenant une pièce munie, à ses extrémités en vis à vis des extrémités des secteurs d'anneau, de rainures dans lesquelles viennent se placer les extrémités des secteurs d'enveloppe annulaire aval. De plus, ces embouts de fixation latérale servent à fixer les secteurs d'anneau aux bras de post combustion par une goupille 8 et une épingle 9.

La présence de ces embouts de fixation latérale permet une dilatation libre des secteurs d'anneau, les extrémités de ces derniers n'étant pas immobilisés. Toutefois le rivet 10 permet de maintenir l'ensemble fixe.

L'invention ne se limite pas aux modes de réalisation de dispositif de fixation décrits ci-avant, seulement à titre d'exemple, mais elle englobe toutes les variantes que pourra envisager l'homme de l'art dans le cadre des revendications ci-après.

## Revendications

1. Anneau de post-combustion pour turboréacteur à double flux, un flux de gaz d'échappement dit flux primaire étant à température plus élevée qu'un flux d'air dit flux secondaire, l'anneau (21) ayant un axe de révolution propre à être mis en coïncidence avec l'axe de rotation du turboréacteur, l'anneau (21) comprenant d'une part une enveloppe annulaire amont formant une gorge ouverte axialement vers l'aval et d'autre part une rampe d'injection de carburant (4) disposée dans la gorge, l'anneau (21) étant formé d'une pluralité de secteurs d'anneau (20) reliés entre eux et comprenant chacun un secteur (1) de l'enveloppe annulaire amont, chaque secteur (1) de l'enveloppe annulaire amont étant munie d'une arrivée de carburant (35) raccordée à la rampe d'injection de carburant (4),
la surface amont de l'enveloppe annulaire amont étant apte à être en contact avec le flux primaire,
**caractérisé en ce que** chaque secteur d'anneau (20) comprend un moyen de raccordement (3), disposé dans la gorge en amont de la rampe d'injection de carburant (4), pour recevoir d'une part l'arrivée de carburant (35) et d'autre part un caisson de ventilation (2) s'étendant dans la gorge sur une partie au moins de la longueur du secteur de l'enveloppe annulaire amont et en amont de la rampe d'injection de carburant (4), chaque secteur (1) de l'enveloppe annulaire amont étant munie d'une arrivée d'air secondaire diffusé par le caisson de ventilation (2) afin de refroidir la rampe d'injection de carburant (4),
et **en ce qu'**un secteur d'enveloppe annulaire aval (5) est disposé en aval de la rampe d'injection de carburant (4) afin de protéger cette dernière.

2. Anneau de post-combustion selon la revendication 1, **caractérisé en ce que** le secteur d'enveloppe annulaire aval (5) forme une gorge ouverte axialement vers l'aval et est fixé par des moyens de fixation au secteur (1) de l'enveloppe annulaire amont.

3. Anneau de post-combustion selon l'une des revendications précédentes, **caractérisé en ce que** le secteur d'enveloppe annulaire aval (5) comprend des moyens de maintien placés axialement en amont afin de maintenir en place la rampe d'injection de carburant (4), le caisson de ventilation (2) contre la paroi interne du secteur (1) d'enveloppe annulaire amont et de relier le secteur d'enveloppe annulaire aval (5) à la paroi interne du secteur (1) d'enveloppe annulaire amont.

4. Anneau de post-combustion selon l'une des revendications précédentes, **caractérisé en ce que** le moyen de raccordement (3) comprend un même creux formant réceptacle pour l'arrivée de carburant (35) et pour l'arrivée d'air secondaire.

5. Anneau de post-combustion selon l'une des revendications précédentes, **caractérisé en ce que** le caisson de ventilation (2) comprend deux tubes creux multi-perforés, le moyen de raccordement (3) comprenant deux ouvertures en vis à vis sur la circonférence, situés de part et d'autre du creux formant réceptacle d'arrivée d'air, les premier et deuxième tubes étant chacun maintenu à leur extrémité ouverte dans une des deux ouvertures, leur extrémité ouverte débouchant sur le creux formant réceptacle d'arrivée d'air.

6. Anneau de post-combustion selon l'une des revendications précédentes, **caractérisé en ce que** les secteurs d'anneau (20) sont reliés entre eux par des embouts de fixation latérale comprenant une pièce munie de rainures dans lesquelles viennent se placer les extrémités des secteurs d'enveloppe annulaire aval (5).

7. Anneau de post-combustion selon l'une des revendications précédentes, **caractérisé en ce que** la courbure de la surface amont du moyen de raccordement (3) est complémentaire de la courbure de la surface aval de l'enveloppe amont.

8. Dispositif de post-combustion pour turboréacteur à double flux, un flux de gaz d'échappement dit flux primaire étant à température plus élevée qu'un flux d'air dit flux secondaire, le dispositif comprenant un carter annulaire externe (25) et un carter annulaire d'échappement à l'intérieur et à distance du carter annulaire externe (25) et comprenant des parois annulaire interne (29) et externe (27) ayant pour axe de révolution l'axe de rotation du turboréacteur, la paroi externe et le carter annulaire externe définissant un passage pour le flux secondaire, la paroi annulaire externe (27) et la paroi annulaire interne (29) définissant un passage pour le flux primaire, le dispositif comprenant encore des bras de post-combustion (22),
**caractérisé en ce que** la paroi externe (27) présente des orifices et **en ce que** le dispositif comprend l'anneau de post-combustion (21) selon l'une des revendications précédentes fixé à la paroi annulaire externe (27) de telle sorte que la surface amont de l'enveloppe annulaire amont est en contact avec le flux primaire et que l'arrivée d'air secondaire de chaque secteur (1) de l'enveloppe annulaire amont coïncide avec les orifices de la paroi externe (27).

9. Dispositif de post-combustion selon la revendication 8, **caractérisé en ce que** l'enveloppe annulaire amont est en appui sur le dos des bras de post-combustion (22), les secteur (1) de l'enveloppe annulaire amont étant fixés entre-eux et aux dos des bras de post-combustion (22) par des moyens de fixation appliqués sur des embouts de fixation comprenant une pièce munie de rainures dans lesquelles viennent se placer les extrémités des secteurs d'enveloppe annulaire aval (5).

10. Turboréacteur comprenant un dispositif de post combustion selon l'une des revendications 8 et 9.

## Claims

1. Post-combustion ring for dual-flow turbojet, comprising an escape gas flow known as the primary flow being at a higher temperature than an air flow known as the secondary flow, the ring (21) having an axis of revolution capable of being brought to coincide with the axis of rotation of the turbojet, the ring (21) having on the one hand an upstream annular sheath forming a recess which is open in the direction axially downstream and on the other hand a fuel injection manifold (4) disposed in the recess, the ring (21) being formed of a plurality of interconnected sectors (20) of each sector comprising a sector (1) of the upstream annular sheath, each sector (1) of the upstream annular sheath being equipped with a fuel intake (35) connected to the fuel injection manifold (4), the upstream surface of the upstream annular sheath being capable of being in contact with the primary flow, **characterised in that** each sector (20) of the ring has a connecting means (3) disposed in the recess upstream of the fuel injection manifold (4) in order to receive on the one hand the fuel intake (35) and on the other hand a ventilation caisson (2) extending into the recess over part at least of the length of the sector of the upstream annular sheath and upstream of the fuel injection manifold (4), each sector (1) of the upstream annular sheath being equipped with an intake of secondary air diffused through the ventilation caisson (2) in order to cool the fuel injection manifold (4), and **in that** a sector of the downstream annular sheath (5) is disposed downstream of the fuel injection manifold (4) in order to protect the same.

2. Post-combustion ring according to claim 1, **characterised in that** the downstream annular sheath sector (5) forms a recess which is open axially in the downstream direction and is fixed by fixing means to the sector (1) of the upstream annular sheath.

3. Post-combustion ring according to one of the preceding claims, **characterised in that** the downstream annular sheath sector (5) has holding means located axially upstream in order to keep in place the fuel injection manifold (4) and the ventilation caisson (2) against the inner wall of the upstream annular sheath sector (1) and to connect the downstream annular sheath sector (5) to the inner wall of the upstream annular sheath sector (1).

4. Post-combustion ring according to one of the preceding claims, **characterised in that** the connecting means (3) comprises a hollow forming a receptacle both for the fuel intake (35) and for the intake of secondary air.

5. Post-combustion ring according to one of the preceding claims, **characterised in that** the ventilation caisson (2) has two multi-perforated hollow tubes, the connecting means (3) comprising two opposite apertures on the circumference located on either side of the hollow forming an air intake receptacle, the first and second tubes each being held at their open end in one of the two apertures, their open end opening into the hollow forming the air intake receptacle.

6. **Post-combustion ring according to one of the preceding claims,**
**characterised in that** the sectors of the ring (20) are connected together by connectors having lateral fixing and comprising a part equipped with grooves in which the ends of the sectors of the downstream annular sheath (5) locate.

7. Post-combustion ring according to one of the preceding claims, **characterised in that** the curvature of the upstream surface of the connecting means (3) is complementary to the curvature of the downstream surface of the upstream sheath.

8. Post-combustion device for a dual-flow turbojet, comprising an escape gas flow known as the primary flow being at a higher temperature than an air flow known as the secondary flow, the device comprising an outer annular housing (25) and an annular escape housing on the inside and spaced apart from the outer annular housing (25) and comprising annular inner (29) and outer (27) walls which have for an axis of revolution the axis of rotation of the turbojet, the outer wall and the outer annular housing defining a passage for the secondary flow, the outer annular wall (27) and the inner annular wall (29) defining a passage for the primary flow, the device further comprising post-combustion arms (22), **characterised in that** the outer wall (27) has openings and **in that** the device comprises the post-combustion ring (21) according to one of the preceding claims fixed to the outer annular wall (27) in such a manner that the upstream surface of the upstream annular sheath is in contact with the primary flow and the secondary air intake of each sector (1) of the upstream annular sheath coincides with the openings of the outer wall (27).

9. Post-combustion device according to claim 8, **characterised in that** the upstream annular sheath bears on the back of the post-combustion arms (22), the sectors (1) of the upstream annular sheath being fixed together and to the back of the post-combustion arms (22) by fixing means applied to the fixing connectors comprising a part equipped with grooves in which the ends of the sectors of the downstream annular sheath (5) locate.

10. Turbojet comprising a post-combustion device according to either of claims 8 or 9.

## Patentansprüche

1. Nachbrennerring für Doppelstrom-Strahlturbine, wobei ein Abgasstrom, genannt Primärstrom, eine höhere Temperatur aufweist, als ein Luftstrom, genannt Sekundärstrom, wobei der Ring (21) eine Drehachse aufweist, die in der Lage ist, in Übereinstimmung mit der Drehachse der Strahlturbine gesetzt zu werden, wobei der Ring (21) einerseits eine stromaufwärtige ringförmige Hülle, die einen zur stromabwärtigen Seite hin axial offenen Hals und andererseits eine Brennstoffeinspritzrampe (4) aufweist, die in dem Hals angeordnet ist, wobei der Ring (21) aus einer Mehrzahl von Ringabschnitten (20) gebildet ist, die untereinander verbunden sind, und jeweils einen stromaufwärtigen ringförmigen Hüllabschnitt (1) aufweisen, wobei jeder stromaufwärtige ringförmige Hüllabschnitt (1) mit einer Brennstoffzuleitung (35) versehen ist, die mit der Brennstoffeinspritzrampe (4) verbunden ist, wobei die stromaufwärtige Oberfläche der stromaufwärtigen ringförmigen Hülle in der Lage ist, in Kontakt mit dem Primärstrom zu sein,
**dadurch gekennzeichnet, dass** jeder Ringabschnitt (20) eine Verbindungseinrichtung (3) aufweist, die in dem Hals stromauf der Brennstoffeinspritzrampe (4) angeordnet ist, um einerseits die Brennstoffzuleitung (35) und andererseits einen Lüftungskasten (2) aufzunehmen, der sich in den Hals über einen Abschnitt wenigstens der Länge des stromaufwärtigen ringförmigen Hüllabschnitts und stromauf der Brennstoffeinspritzrampe (4) erstreckt, wobei jeder stromaufwärtige ringförmige Hüllabschnitt (1) mit einer Zuleitung von Sekundärluft versehen ist, die durch den Lüftungskasten (2) verteilt wird, um die Brennstoffeinspritzrampe (4) zu kühlen,
und dass ein stromabwärtiger ringförmiger Hüllabschnitt (5) stromab der Brennstoffeinspritzrampe (4) angeordnet ist, um letztere zu schützen.

2. Nachbrennerring nach Anspruch 1, **dadurch gekennzeichnet, dass** der stromabwärtige ringförmige Hüllabschnitt (5) einen zur stromabwärtigen Seite axial offenen Hals bildet, und mittels Befestigungseinrichtungen am stromaufwärtigen ringförmigen Hüllabschnitt (1) befestigt ist.

3. Nachbrennerring nach einem der vorhergehenden Ansprüche, **dadurch gekennzeichnet, dass** der stromabwärtige ringförmige Hüllabschnitt (5) Halteeinrichtungen aufweist, die axial stromaufwärtig angeordnet sind, um die Brennstoffeinspritzrampe (4) am Platz, den Ventilkasten (2) gegen die Innenwand des stromaufwärtigen ringförmigen Hüllabschnitts (1) zu halten und den stromabwärtigen ringförmigen Hüllabschnitt (5) mit der Innenwand des stromaufwärtigen ringförmigen Hüllabschnitts (1) zu verbinden.

4. Nachbrennerring nach einem der vorhergehenden Ansprüche, **dadurch gekennzeichnet, dass** die Verbindungseinrichtung (3) eine selbige Vertiefung aufweist, die einen Behälter für die Brennstoffzuleitung (35) und für die Sekundärluftzuleitung bildet.

5. Nachbrennerring nach einem der vorhergehenden Ansprüche, **dadurch gekennzeichnet, dass** der Lüftungskasten (2) zwei hohle mehrfach perforierte Rohre aufweist, wobei die Verbindungseinrichtung (3) zwei an ihrem Umfang einander gegenüberliegende Öffnungen aufweist, die beiderseits der Vertiefung angeordnet sind, die den Luftzuleitungsbehälter bildet, wobei das erste und das zweite Rohr jeweils an seinem offenen Ende in einer der beiden Öffnungen gehalten ist, wobei ihre offenen Enden in der Vertiefung münden, die den Luftzuleitungsbehälter bildet.

6. Nachbrennerring nach einem der vorhergehenden Ansprüche, **dadurch gekennzeichnet, dass** die Ringabschnitte (20) untereinander durch seitliche Befestigungsansatzstücke verbunden sind, die ein Teil mit Nuten aufweisen, in denen die Enden der stromabwärtigen ringförmigen Hüllabschnitte (5) zu liegen kommen.

7. Nachbrennerring nach einem der vorhergehenden Ansprüche, **dadurch gekennzeichnet, dass** die Krümmung der Oberfläche stromauf der Verbindungseinrichtung (3) komplementär ist zur Krümmung der Oberfläche stromab der stromaufwärtigen Hülle.

8. Nachbrennervorrichtung für Doppelstrom-Strahlturbine, wobei ein Abgasstrom, genannt Primärstrom, sich bei einer Temperatur befindet, die höher ist als ein Luftstrom, genannt Sekundärstrom, wobei die Vorrichtung ein äußeres ringförmiges Gehäuse (25) und ein ringförmiges Abgasgehäuse im Inneren und beabstandet vom äußeren ringförmigen Gehäuse (25), und eine innere Seitenwand (29) und eine äußere Seitenwand (27) aufweist, die als Drehachse die Drehachse der Strahlturbine haben, wobei die äußere Seitenwand und das äußere ringförmige Gehäuse eine Passage für den Sekundärstrom definieren, wobei die äußere ringförmige Seitenwand (27) und die innere ringförmige Seitenwand (29) eine Passage für den Primärstrom definieren, wobei die Vorrichtung noch weiterhin Nachbrennerarme (22) aufweist,
**dadurch gekennzeichnet, dass** die äußere Seitenwand (27) Öffnungen aufweist, und dass die Vorrichtung den Nachbrennerring (21) nach einem der vorhergehenden Ansprüche aufweist, der an der äußeren Seitenwand (27) derart befestigt ist, dass die stromaufwärtige Oberfläche der stromaufwärtigen ringförmigen Hülle in Kontakt steht mit dem Primärstrom, und dass die Zuführleitung von Sekundärluft eines jeden stromaufwärtigen ringförmigen mit den Öffnungen der äußeren Seitenwand (27) übereinstimmen.

9. Nachbrennervorrichtung nach Anspruch 8, **dadurch gekennzeichnet, dass** die stromaufwärtige ringförmige Hülle in Anschlag gegen den Rücken der Nachverbrennungsarme (22) steht, wobei die stromaufwärtigen ringförmigen Hüllabschnitte (1) untereinander und an dem Rücken der Nachbrennerarme (22) durch Befestigungseinrichtungen befestigt sind, die auf den Befestigungsansatzstücken angebracht sind, welche ein mit Nuten versehenes Element aufweisen, in denen die Enden der stromabwärtigen ringförmigen Hüllabschnitte (5) zu liegen kommen.

10. Strahlturbine mit einer Nachbrennervorrichtung nach Anspruch 8 oder 9.
